Europäisches Patentamt

**(19)** European Patent Office

Office européen des brevets

**(11)** Numéro de publication : **0 459 871 A1**

**(12)** DEMANDE DE BREVET EUROPEEN

**(21)** Numéro de dépôt : **91401320.6**

**(22)** Date de dépôt : **22.05.91**

**(51)** Int. Cl.⁵ : **F16F 1/14, B60G 11/50**

**(30)** Priorité : **28.05.90 FR 9006582**

**(43)** Date de publication de la demande :
**04.12.91 Bulletin 91/49**

**(84)** Etats contractants désignés :
**AT BE CH DE DK ES FR GB GR IT LI LU NL SE**

**(71)** Demandeur : **ASCOMETAL**
**Immeuble Elysées-La Défense 29, Le Parvis**
**Cédex 34**
**F-92072 PARIS-LA DEFENSE 4 (FR)**

**(72)** Inventeur : **Genouille, Michel**
**6, rue de l'arbreuvoir**
**F-91370 Verrieres le Buisson (FR)**

**(74)** Mandataire : **Tilliet, René Raymond Claude et al**
**Cabinet Lavoix 2, Place d'Estienne d'Orves**
**F-75441 Paris Cédex 09 (FR)**

**(54)** Organe élastique de torsion notamment pour suspension de véhicule automobile, comportant des moyens de modification discontinue de sa raideur.

**(57)** Cet organe élastique de torsion est caractérisé en ce qu'il comporte des moyens de modification discontinue de sa raideur, en fonction de sa déformation en torsion.

Selon un mode de réalisation, cet organe élastique de torsion comporte une âme centrale (4), les moyens de modification de la raideur comprenant au moins un ressort hélicoïdal (7) disposé autour de l'âme.

EP 0 459 871 A1

La présente invention concernen un organe élastique de torsion notamment pour suspension de véhicule automobile.

On connaît déjà dans l'état de la technique un certain nombre de barres de torsion et notamment dans le domaine de l'industrie automobile.

En effet, la fonction élastique d'une suspension classique de véhicule automobile, est assurée par un ressort qui est soit un ressort à lame, soit un ressort hélicoïdal ou par une barre de torsion.

Celle-ci est généralement constituée par une pièce cylindrique à laquelle le couple de torsion est appliqué grâce à des extrémités cannelées.

Le ressort hélicoïdal permet d'obtenir une raideur variable lorsque le diamètre d'enroulement et/ou le diamètre du fil du ressort n'est pas constant.

Les exigences modernes de confort, alliées aux impératifs de sécurité, conduisent à préférer des suspensions offrant une raideur relativement faible pour de faibles sollicitations et une raideur relativement élevée pour des sollicitations plus importantes.

Or, dans leur conception actuelle les barres de torsion offrent une raideur qui est déterminée par une géométrie définie, c'est-à-dire leur longueur et leur diamètre, et cette raideur est nécessairement constante.

Le but de l'invention est donc de résoudre ces problèmes en proposant un organe élastique de torsion dont la raideur est variable.

A cet effet, l'invention a pour objet un organe élastique de torsion notamment pour suspension de véhicule automobile comportant des moyens de modification discontinue de sa raideur en fonction de sa déformation en torsion.

Selon un mode de réalisation, cet organe comporte une âme centrale dont une extrémité est reliée à une partie fixe de la suspension et l'autre est libre et les moyens de modification de sa raideur comprennent au moins un ressort hélicoïdal disposé autour de l'âme, dont l'une des extrémités est reliée à la partie fixe de la suspension et l'autre à la partie mobile.

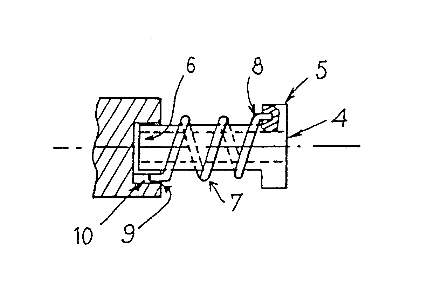

L'invention sera mieux comprise à l'aide de la description qui va suivre, donnée uniquement à titre d'exemple et faite en se référant au dessin annexé, sur lequel :

– la figure unique représente un mode de réalisation de l'organe élastique selon l'invention.

Ainsi qu'on l'a mentionné précédemment, un organe élastique de torsion, selon l'invention, est adapté par exemple pour être utilisé dans une suspension de véhicule automobile et est caractérisé en ce qu'il comporte des moyens de modification discontinue de sa raideur en fonction de sa déformation en torsion.

Ceci permet de répondre aux exigences modernes de confort mentionnées précédemment qui conduisent à préférer des suspensions offrant une raideur relativement faible pour de faibles sollicitations et une raideur relativement élevée pour des sollications plus importantes.

Dans le mode de réalisation représenté sur la figure unique, l'organe élastique de torsion comporte une âme centrale 4 dont une extrémité, 5, est reliée à la partie fixe de la suspension et l'autre, 6, est libre.

Les moyens de modification comprennent au moins un ressort hélicoïdal 7 disposé autour de l'âme, dont l'une des extrémités 8 est reliée à la partie fixe de la suspension et l'autre 9 est reliée à la partie mobile 10 de celle-ci. Dans ce mode de réalisation, lors d'une première phase de déformation, seul le ressort se déforme, et l'organe présente alors la raideur de ce ressort en torsion jusqu'au moment où celui-ci est suffisamment déformé pour venir en contact avec l'âme centrale et entraîner celle-ci en déformation. Ainsi, après le contact entre le ressort et l'âme centrale, ces deux pièces participent à la torsion et l'organe présente alors une raideur combinée plus élevée que la seule raideur en torsion du ressort.

L'utilisation de deux ressorts jumelés de pas identique permet d'équilibrer les effets de flexions résultant d'introduction d'éfforts non symétriques.

Dans le mode de réalisation représenté, la variation de la raideur peut également être réglée à travers plusieurs paramètres, comme par exemple le diamètre du fil du ou des ressorts, le jeu diamétral entre le ou les ressorts et l'âme centrale, le pas du ou des ressorts et différentes caractéristiques de l'âme.

Avantageusement, ces moyens d'accouplement comprennent des éléments élastiques d'amortissement du ou des contacts entre ces moyens.

**Revendications**

1. Organe élastique de torsion notamment pour suspension de véhicule automobile, comportant des moyens (7) de modification discontinue de sa raideur, en fonction de sa déformation en torsion, caractérisé en ce qu'il est composé d'une âme centrale (4) dont une extrémité est reliée à une partie fixe (5) de la suspension et l'autre (6) est libre et en ce que les moyens de modification de sa raideur comprennent un ressort hélicoïdal (7) disposé autour de l'âme (4) dont l'une des extrémités est reliée à la partie fixe (5) de la suspension et l'autre à la partie mobile (10) de celle-ci.

EP 0 459 871 A1

Office européen
des brevets

RAPPORT DE RECHERCHE EUROPEENNE

Numero de la demande

EP     91 40 1320

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | BE-A-445931 (M. VON LATSCHER-LATKA)<br>* le document en entier * <br>--- | 1 | F16F1/14<br>B60G11/50 |
| A | CH-A-230003 (E. VON LATSCHER-LATKA ET AL.)<br>* page 3, lignes 54 - 94; figures 5, 6 *<br>--- | 1 | |
| A | US-A-4588175 (MARTIN DOOR MANUFACTURING)<br>----- | | |

DOMAINES TECHNIQUES RECHERCHES (Int. Cl.5)

F16F
B60G

Le présent rapport a été établi pour toutes les revendications

| Lieu de la recherche | Date d'achèvement de la recherche | Examinateur |
|---|---|---|
| LA HAYE | 30 AOUT 1991 | PEMBERTON P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

4